# EUROPEAN PATENT APPLICATION

(11) **EP 4 438 175 A1**
(43) Date of publication of application: **02.10.2024**
(21) Application number: 22898429.0
(22) Date of filing: 11.11.2022
(51) Int. Cl.: B01J 37/02, B05C 7/04

(54) **METHOD FOR MANUFACTURING EXHAUST GAS PURIFICATION CATALYST DEVICE**

(30) Priority: 24.11.2021 JP 2021190369
(71) Applicant: CATALER CORPORATION, Kakegawa-shi, Shizuoka 437-1492 (JP)
(72) Inventor: OGA, Koji, Kakegawa-shi, Shizuoka 437-1492 (JP); OKADA, Hiroki, Kakegawa-shi, Shizuoka 437-1492 (JP); TAKAHASHI, Masaki, Kakegawa-shi, Shizuoka 437-1492 (JP)
(74) Representative: Wallinger Ricker Schlotter Tostmann
(86) International application number: PCT/JP2022/042104
(87) International publication number: WO 2023/095645

(57) **Abstract**

The present invention provides a method for manufacturing an exhaust gas purification catalyst device, that includes: (A) holding a honeycomb base material, which has a plurality of cell flow paths divided by cell walls, so that the flow path direction of the cell flow paths is vertical, and placing a coating liquid for catalyst coating layer formation on the upper end surface of the base material; (B) suctioning the post-step (A) base material from the lower end surface by a decompression pump to apply the coating liquid on the cell walls and/or in the cell walls of the base material; and, (C) transferring the post-step (A) base material to the next step, wherein step (B) and step (C) are performed simultaneously by a transfer/suction device 100.

## Description

### FIELD

The present invention relates to a method for manufacturing an exhaust gas purification catalyst device.

### BACKGROUND

Exhaust gas emitted from internal combustion engines such as automobile engines is purified by an exhaust gas purification catalyst device installed in the exhaust system, and then released into the atmosphere. Such an exhaust gas purification catalyst device has a structure comprising, for example, a honeycomb substrate having a plurality of cell flow channels partitioned by partition walls, and a catalyst coating layer formed on and/or in the partition walls of the honeycomb substrate.

Such an exhaust gas purification catalyst device is manufactured by, for example, coating a honeycomb substrate with a coating liquid containing the raw material components of the catalyst coating layer, and then firing the coating liquid.

Coating of a honeycomb substrate with a coating liquid by a method in which the coating liquid is placed on one end surface of the honeycomb substrate and then suctioned from the opposite end surface is known. For example, Patent Literature 1 describes coating a honeycomb substrate with a coating liquid by attaching a frame-shaped storage jig, which is capable of retaining the coating liquid, to a first end surface of the honeycomb substrate, placing the coating liquid on the first end surface, and relatively reducing the pressure on a second end surface side opposite to the first end surface as compared to the pressure on the first end surface side to cause the coating liquid to flow from the first end surface to the second end surface.

Industrial manufacturing of exhaust gas purification catalyst devices is typically performed by automated processing systems. In automatic processing systems, a plurality of processing stations are provided from the upstream side to the downstream side, and workpieces are sequentially processed while being transported from upstream processing stations to downstream processing stations.

In such an automatic processing system, the processing times of the processing stations do not necessarily match. In this case, among a series of processing stations provided from the upstream side to the downstream side, the processing at the processing station that requires the longest processing time becomes the rate-determining step of the entire process.

In such a case, it is conceivable to provide a plurality of rate-determining processing devices, arrange them side-by-side from the upstream side to the downstream side of the automatic processing system, and share the rate-determining process.

For example, Patent Literature 2 describes a conveyance device comprising a conveyance means for conveying a workpiece (processing object) along a conveyance line, and a processing means provided in the vicinity of this conveyance line, wherein an auxiliary overtaking means for grasping and lifting a preceding workpiece on the conveyance line is provided, whereby a trailing workpiece can overtake the preceding workpiece and be transported first.

### [CITATION LIST]

### [PATENT LITERATURE]

[PTL 1] Japanese Unexamined Patent Publication (Kokai) No. 2018-015704
[PTL 2] Japanese Unexamined Patent Publication (Kokai) No. 2003-237940

### SUMMARY

### [TECHNICAL PROBLEM]

When coating a honeycomb substrate with a coating liquid by placing the coating liquid on one end of the honeycomb substrate and suctioning it from the opposite end, the suction process is often rate-limiting.

Specifically, in a coating method involving placing a coating liquid on an end surface of a honeycomb substrate and suctioning, the step of suctioning from the opposite end often takes a longer time than the step of placing the coating liquid on one end of the honeycomb substrate, and thus, the suction step often becomes the rate-limiting factor for coating of the coating liquid.

When applying the method described in Patent Literature 2 to the coating of a honeycomb substrate with a coating liquid where the suction step is rate-limiting, the time from placing the coating liquid to starting suction will vary depending on the honeycomb substrate, and the quality of the obtained coating layer will vary depending on the honeycomb substrate.

In place of the method described in Patent Literature 2, for a certain processing that requires a predetermined processing time, one workpiece is sequentially delivered to a plurality of processing devices, and short processes are divided amongst and performed by the processing devices, thereby ensuring a predetermined processing time for all of the plurality of processing devices.

However, when coating a honeycomb substrate with a coating liquid, if the suctioning after placing the coating liquid on the end surface is divided into parts, and performed by the respective devices, the coating layer can be uneven, whereby there is a risk that the exhaust gas purification ability will be impaired.

In the automatic processing systems of the prior art, it is not possible to process a workpiece while it is being transported from one processing station to the next. Thus, in addition to the processing time at each processing station, the transport time must also be considered as part of the processing time, which is an obstacle to reducing the overall processing time.

The present invention has been conceived in view of the above circumstances, and an object thereof is to provide a highly-efficient method for manufacturing an exhaust gas purification catalyst device with which, when a honeycomb substrate is coated with a coating liquid by placing the coating liquid on one end surface of the honeycomb substrate and suctioning from the opposite end surface, it is possible to shorten the processing time of the entire process while ensuring the specified suction time, and with which a high-quality coating layer can be obtained.

### [SOLUTION TO PROBLEM]

The present invention is as described below.

### <Aspect 1>

A method for manufacturing an exhaust gas purification catalyst device, the method comprising the steps of:
(A) holding a honeycomb substrate having a plurality of cell flow channels partitioned by cell walls so that a flow direction of the cell flow channels is vertical, and placing a catalyst layer formation coating liquid on an upper end surface of the substrate,
(B) suctioning the substrate after the step (A) from a lower end surface with a vacuum pump to coat one or both of on the cell walls and in the cell walls of the substrate with the coating liquid, and
(C) transporting the substrate after the step (A) to a subsequent step, wherein
   the step (B) and the step (C) are performed simultaneously by a transport suction device.

### <Aspect 2>

The method for manufacturing an exhaust gas purification catalyst device according to Aspect 1, wherein the transport suction device has one or more vacuum channels which connect the lower end surface of the substrate after the step (A) and the vacuum pump.

### <Aspect 3>

The method for manufacturing an exhaust gas purification catalyst device according to Aspect 2, wherein
each of the vacuum channels includes a first vacuum channel and a second vacuum channel,
the first vacuum channel is connected to a vacuum pump and is depressurized,
the second vacuum channel:
   connects the lower end surface of the substrate and the first vacuum channel after the transport suction device receives the substrate after the step (A) until the substrate is transported to a predetermined position, and
   releases the connection between the lower end surface of the substrate and the first vacuum channel when the substrate is transported to a predetermined position.

### <Aspect 4>

The method for manufacturing an exhaust gas purification catalyst device according to Aspect 3, wherein
the transport suction device has a first layer including the first vacuum channel and a second layer including the second vacuum channel, and is composed of two layers in which these are stacked,
the second layer is movable relative to the first layer, and
after receiving the substrate after the step (A), the second layer transports the substrate to a subsequent step by moving relative to the first layer.

### <Aspect 5>

The method for manufacturing an exhaust gas purification catalyst device according to any one of Aspects 1 to 4, wherein the transport suction device is disc-shaped.

### <Aspect 6>

The method for manufacturing an exhaust gas purification catalyst device according to Aspect 4, wherein
the transport suction device has a two-layer disc shape in which the first layer and the second layer, each having a disc shape, are stacked coaxially, and
the relative movement of the second layer relative to the first layer is rotation.

### <Aspect 7>

The method for manufacturing an exhaust gas purification catalyst device according to Aspect 6, wherein
the first vacuum channel has:
a pump connection opening, for connection to the vacuum pump, which is open in a surface of the first layer opposite to the second layer, and
an arcuate opening which is open in a surface of the second layer side surface along a circumference of the first layer,
the second vacuum channel has:
   a vacuum channel connection opening for connection with the first vacuum channel, which is open in a surface of the second layer on the first layer side, and
   a substrate connection opening for connection with the lower end surface of the substrate after the step (A), which is open in a surface opposite to the first layer,
   when the second layer rotates relative to the first layer,
   after the second layer has received the substrate after the step (A) and until the substrate is transported to a predetermined position, the vacuum channel connection opening of the second layer moves along the arc shape of the arcuate opening of the first layer, and
   when the substrate is transported to a predetermined position, the vacuum channel connection opening of the second layer deviates from the arc shape of the arcuate opening of the first layer, whereby the connection between the lower end surface of the substrate and the first vacuum channel is released.

### <Aspect 8>

The method for manufacturing an exhaust gas purification catalyst device according to Aspect 7, wherein a central angle of the arc shape of the arcuate opening of the first vacuum channel is 90° or more and 270° or less.

### <Aspect 9>

An exhaust gas purification catalyst device manufacturing system, comprising:
a coating liquid placement device for holding a honeycomb substrate having a plurality of cell flow channels partitioned by cell walls so that a flow direction of the cell flow channels is vertical, and placing a catalyst layer formation coating liquid on an upper end surface of the substrate, and
a transport suction device for simultaneously performing suctioning of the substrate after the step (A) from a lower end surface to coat one or both of on the cell walls and in the cell walls of the substrate with the coating liquid, and transporting of the substrate after the step (A) to a subsequent step.

### <Aspect 10>

A transport suction device, for simultaneously performing suctioning of a substrate having a plurality of cell flow channels partitioned by cell walls and having a catalyst layer formation coating liquid placed on an upper end surface thereof, from a lower end surface thereof to coat one or both of on the cell walls and in the cell walls of the substrate with the coating liquid, and transporting of the substrate to a subsequent step.

### [ADVANTAGEOUS EFFECTS OF INVENTION]

According to the present invention, there is provided a highly-efficient method for manufacturing an exhaust gas purification catalyst device with which, when a honeycomb substrate is coated with a coating liquid by placing the coating liquid on one end surface of the honeycomb substrate and suctioning from the opposite end surface, it is possible to shorten the processing time of the entire process while ensuring the specified suction time, and with which a high-quality coating layer can be obtained.

### BRIEF DESCRIPTION OF DRAWINGS

FIG. 1 is a perspective view showing an overview of an example of a transport suction device according to the present invention.
FIG. 2 is an internally-transparent perspective view showing the internal structure of a first layer and a second layer of an example of the transport suction device of the present invention.

### DESCRIPTION OF EMBODIMENTS

### «Method for Manufacturing Exhaust Gas Purification Catalyst Device»

The method for manufacturing an exhaust gas purification catalyst device of the present invention is directed to:
a method for manufacturing an exhaust gas purification catalyst device, the method comprising the steps of:
   (A) holding a honeycomb substrate having a plurality of cell flow channels partitioned by cell walls so that a flow direction of the cell flow channels is vertical, and placing a catalyst layer formation coating liquid on an upper end surface of the substrate (coating liquid placement step),
   (B) suctioning the substrate after the (A) coating liquid placement step from a lower end surface with a vacuum pump to coat one or both of on the cell walls and in the cell walls of the substrate with the coating liquid (suction coating step), and
   (C) transporting the substrate after the (A) coating liquid placement step to a subsequent step (transport step), wherein
the (B) suction coating step and the (C) transport step are performed simultaneously by a transport suction device.

In the method for manufacturing an exhaust gas purification catalyst device of the present invention, a transport suction device is used to simultaneously transport and suction the substrate after the catalyst layer formation coating liquid placement. According to this method, since congestion while waiting for suction does not occur, the time from the placement of the coating liquid on the honeycomb substrate to the start of suction can be easily controlled to a predetermined time. In the method of the present invention, the transport suction device performs the suction step for one honeycomb substrate without interruption. Thus, unevenness in the obtained coating layer is unlikely to occur, whereby a high-quality coating layer can be obtained. According to the method of the present invention, since the suction coating step is carried out even during the transport time, when it was not possible to process a workpiece in the technology of the prior art, the processing time of the entire process can be significantly reduced.

As described above, the method for manufacturing an exhaust gas purification catalyst device of the present invention includes (A) a coating liquid placement step, (B) a suction coating step, and (C) a transport step, and in the method for manufacturing an exhaust gas purification catalyst device, the (B) suction coating step and the (C) transport step are performed simultaneously by the transport suction device.

Each element of the method for manufacturing an exhaust gas purification catalyst device of the present invention will be described in order below.

### <Substrate>

The substrate applied to the method for manufacturing an exhaust gas purification catalyst device of the present invention is a honeycomb substrate having a plurality of cell flow channels partitioned by cell walls. The honeycomb substrate may be, for example, a straight-flow or wall-flow monolithic honeycomb substrate composed of a material such as cordierite, SiC, stainless steel, or inorganic oxide particles.

### <(A) Coating Liquid Placement Step>

(A) In the coating liquid placement step, a honeycomb substrate having a plurality of cell flow channels partitioned by cell walls is held so that a flow direction of the cell flow channels is vertical, and a catalyst layer formation coating liquid is placed on an upper end surface of the substrate.

The coating liquid placement step may be performed by a coating device. This coating device may be, for example, a coating device which is capable of placing the coating liquid on the upper end surface of the honeycomb substrate held so that the flow direction of the cell flow channels is vertical.

The coating device may comprise, for example, a frame-shaped placement jig and a coating liquid supply device.

The placement jig has, for example, a frame-like shape, and can be removably arranged at the upper end surface of the honeycomb substrate, and the upper end surface of the substrate and the placement jig may form a placement part for the coating liquid.

The coating liquid supply device may have, for example, a function for supplying and placing the coating liquid to the placement part described above. This coating liquid supply device may be, for example, a shower type or a spray type supply device.

### <(B) Suction Coating Step>

The (B) suction coating step is a step in which the substrate after the (A) coating liquid placement step is suctioned from the lower end surface by a vacuum pump to coat one or both of on the cell walls and in the cell walls of the substrate with the coating liquid.

When the substrate after the coating liquid placement step is suctioned from the lower end surface, an air flow from the top to the bottom of the cell flow channels of the substrate is generated, and as a result, the coating liquid placed on the upper end surface of the substrate flows into the cell flow channels, which are coated with the coating liquid to form a coating layer.

Coating on the cell walls of the substrate with the coating liquid means coating in which a coating layer of the coating liquid is formed on the surfaces of the cell walls facing the cell flow channels. Coating in the cell walls of the substrate with the coating liquid means coating in which a coating layer of the coating liquid is formed on the surfaces of the pore walls of the porous cell walls.

### <(C) Transport Step>

The (C) transport step is a step of transporting the substrate after the (A) coating liquid placement step to a subsequent step.

The subsequent step may be any step such as a firing step, a step of forming a second catalyst coating layer, a step of supporting a catalyst component, a conditioning step, or a casing loading step.

### <Transport Suction Device>

In the method for manufacturing an exhaust gas purification catalyst device of the present invention, the (B) suction coating step and the (C) transport step described above are performed simultaneously by the transport suction device. Thus, this transport suction device is a device that combines a transport function for transporting the substrate after the (A) coating liquid placement step to a subsequent step, and a suction coating function for suctioning the substrate after (A) the coating liquid placement step from the lower end surface thereof to coat one or both of on the cell walls and in the cell walls of the substrate with the coating liquid.

The transport function of the transport suction device may be a function for performing linear transport as exemplified by a belt conveyor, or may be a function for performing transport in an arcuate manner as exemplified by a rotating disk.

The suction coating function of the transport suction device may be realized by a vacuum channel which connects the lower end surface of the substrate after the (A) coating liquid placement step and a vacuum pump. The transport suction device may have only one vacuum channel, or may have two or more vacuum channels.

The vacuum channel of the transport suction device may include a first vacuum channel and a second vacuum channel. The first vacuum channel may be connected to a vacuum pump to reduce the pressure therein. The second vacuum channel is formed by connecting the first vacuum channel in a reduced pressure state and the lower end surface of the substrate after the (A) coating liquid placement step, whereby a reduced pressure may be applied to the lower end surface of the substrate after the (A) coating liquid placement step.

When performing the suction coating step using the transport suction device, in order to ensure airtightness of the connection between the lower end surface of the substrate and the vacuum channel (and in particular, the second vacuum channel), it is preferred aspect of the present invention to interpose a suitable mounting jig between the substrate and the transport suction device.

The second vacuum channel may be movable relative to the first vacuum channel to effect transport of the substrate after the (A) coating liquid placement step.

In a preferred aspect, when the second vacuum channel moves,
when the substrate is within a predetermined range, the second vacuum channel and the first vacuum channel are in a connected state, and reduced pressure is applied to the lower end surface of the substrate, and
when the substrate reaches a predetermined position, the connection between the second vacuum channel and the first vacuum channel is released, the reduced pressure on the lower end surface of the substrate is removed, and the suction coating step ends.

When the transport suction device has two or more vacuum channels, each of the vacuum channels may have a first vacuum channel and a second vacuum channel.

Examples of aspects for realizing the relationship between the first vacuum channel and the second vacuum channel described above include an aspect wherein:
the transport suction device has a first layer including a first vacuum channel and a second layer including a second vacuum channel, and is constituted by stacking these two layers, and
the second layer is movable relative to the first layer.

In such a transport suction device, after receiving the substrate after step (A), the second layer can transport the substrate to a subsequent step by moving relative to the first layer.

The transport suction device used in the method for manufacturing an exhaust gas purification catalyst device of the present invention may have any form as long as it can exhibit the functions described above.

The transport suction device in the present invention may be, for example, disc-shaped. In particular, each layer may have a disc-shaped first layer and second layer, and these may be two disc-shaped layers stacked coaxially. In this case, the second layer can be moved relative to the first layer by rotating the second layer relative to the first layer.

In such a two-layer disc-shaped transport suction device:
the first vacuum channel may have:
a pump connection opening, for connection to the vacuum pump, which is open in a surface of the first layer opposite to the second layer, and
an arcuate opening which is open in a surface of the second layer side surface along a circumference of the first layer.

The second vacuum channel may have:
a vacuum channel connection opening for connection with the first vacuum channel, which is open in a surface of the second layer on the first layer side, and
a substrate connection opening for connection with the lower end surface of the substrate after the step (A), which is open in a surface opposite to the first layer.

As a result of such a configuration, when the second layer rotates relative to the first layer, after the second layer has received the substrate after the step (A) and until the substrate is transported to a predetermined position, the vacuum channel connection opening of the second layer can move along the arc shape of the arcuate opening in the first layer. As a result, the second vacuum channel of the second layer is depressurized via the first vacuum channel of the first layer, whereby the depressurization is also applied to the lower end surface of the substrate on the substrate connection opening of the second layer.

Thus, when the vacuum channel connection opening of the second layer moves along the arc shape of the arcuate opening of the first layer, the (B) suction coating step and the (C) transport step are simultaneously performed on the substrate after the (A) coating liquid placement step.

When the relative rotation of the second layer relative to the first layer continues from the above state, the vacuum channel connection opening of the second layer will be outside of the arc-shaped range of the arcuate opening of the first layer. The connection between the lower end surface of the substrate and the first vacuum channel is then released, the lower end surface of the substrate returns to normal pressure, and the (B) suction coating step ends. When the point where the vacuum channel connection opening is outside the arcuate range of the arcuate opening is set near the destination of the transport, the (C) transport step may also end.

In the disk-shaped transport suction device as described above, by adjusting the central angle of the arcuate opening of the first vacuum channel, it is possible to set an appropriate transport distance in accordance with the positional relationship between the coating liquid placement device and the position where the subsequent step is performed, and also to adjust the suction time in the (B) suction coating step.

The suction time in the (B) suction coating step can also be adjusted by adjusting the relative rotational speed of the second layer relative to the first layer.

In the first layer of the disk-shaped transport suction device as described above, in accordance with the positional relationship between the coating liquid placement device and the subsequent step implementation position, as well as the desired suction time, the central angle of the arc shape of the acuate opening of the first vacuum channel may be, for example, 90° or more, 120° or more, 150° or more, 180° or more, or 210° or more, and may be, for example, 270° or less, 240° or less, 210° or less, 180° or less, or 150° or less.

The central angle of the arc shape of the arcuate opening of the first vacuum channel may typically be 90° or more and 270° or less.

### «Exhaust Gas Purification Catalyst Device Manufacturing System»

According to another aspect of the present invention, there is provided an exhaust gas purification catalyst device manufacturing system.

The exhaust gas purification catalyst device manufacturing system of the present invention is directed to:
an exhaust gas purification catalyst device manufacturing system, comprising:
a coating liquid placement device for holding a honeycomb substrate having a plurality of cell flow channels partitioned by cell walls so that a flow direction of the cell flow channels is vertical, and placing a catalyst layer formation coating liquid on an upper end surface of the substrate, and
a transport suction device for simultaneously performing suctioning of the substrate after the step (A) from a lower end surface to coat one or both of on the cell walls and in the cell walls of the substrate with the coating liquid, and transporting of the substrate after the step (A) to a subsequent step.

Regarding each element of the exhaust gas purification catalyst device manufacturing system of the present invention, the relevant portions of the description of each element of the method for manufacturing an exhaust gas purification catalyst device of the present invention described above can be referenced.

### <<Transport Suction Device>>

According to yet another aspect of the present invention, there is provided a transport suction device.

The transport suction device of the present invention is directed to:
a transport suction device, for simultaneously performing suctioning of a substrate having a plurality of cell flow channels partitioned by cell walls and having a catalyst layer formation coating liquid placed on an upper end (surface) thereof, from a lower end surface thereof to coat one or both of on the cell walls and in the cell walls of the substrate with the coating liquid, and transporting of the substrate to a subsequent step.

Regarding each element of the transport suction device of the present invention, the relevant portions of the description of each element of the method for manufacturing an exhaust gas purification catalyst device of the present invention described above can be referenced.

### <<Embodiment>>

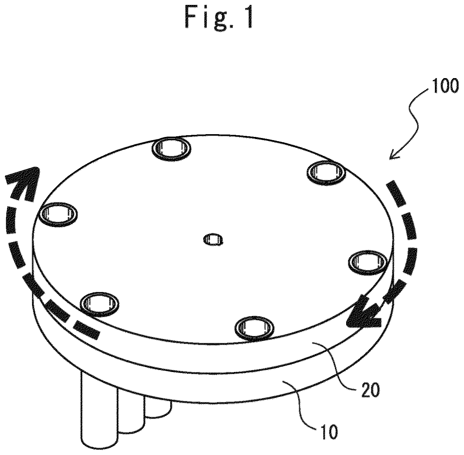

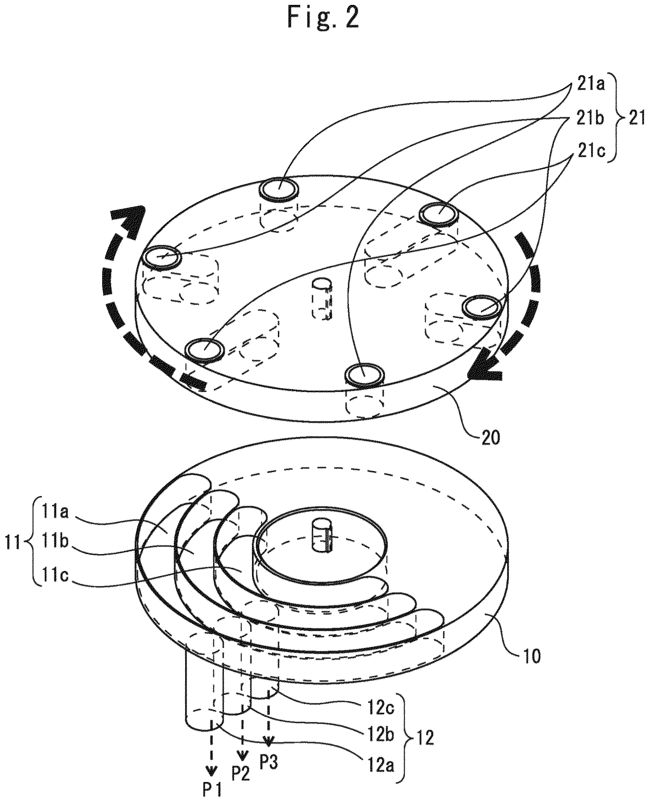

FIGS. 1 and 2 show the configuration of an example of a transport suction device used in the method for manufacturing an exhaust gas purification catalyst device of the present invention. FIG. 1 is a perspective view showing the general shape of the transport suction device, and FIG. 2 is an internally-transparent perspective view detailing the internal structures of the first layer and the second layer constituting the transport suction device.

The transport suction device (100) shown in FIGS. 1 and 2 has a first layer (10) and a second layer (20), which are each disk-shaped, and has a disk shape constituted by coaxially stacking these two layers.

The second layer (20) of the transport suction device (100) can rotate in the direction of the dashed arrow in FIGS. 1 and 2, and as a result, the second layer (20) can be moved relative to the first layer (10).

As shown in FIG. 2, the first layer (10) of the transport suction device (100) includes a first vacuum channel (11), and the second layer (20) includes a second vacuum channel (21).

The first vacuum channel (11) of the first layer (10) is constituted from three channel systems including a first vacuum channel A-system (11a), a first vacuum channel B-system (11b), and a first vacuum channel C-system (11c).

Each channel system of the first vacuum channel (11) of the first layer (10) has an arcuate opening which is open in an arc shape along the circumference of the disc-shaped first layer (10) in the upper surface (the surface on the second layer (20) side) of the first layer (10), and has a pump connection opening for connection to a vacuum pump in the lower surface (the surface opposite to the second layer (20)).

The arcuate openings included in the respective channel systems of the first vacuum channel (11) are formed concentrically, and the central angle of each arcuate opening is approximately 180°.

The pump connection opening of each channel is connected to the vacuum pump via a vacuum pump connection path (12). In the transport suction device (100), three first vacuum channel-systems (11a, 11b, 11c) are each connected to a unique vacuum pump (P1, P2, P3) via a unique vacuum pump connection path (12a, 12b, 12c).

The lower surface of the first layer (10) has no openings other than the pump connection opening of the first vacuum channel (11).

The second vacuum channel (21) of the second layer (20) is constituted from three channel systems including a second vacuum channel A-system (21a), a second vacuum channel B-system (21b), and a second vacuum channel C-system (21c).

Each channel system of the second vacuum channel (21) of the second layer (20) has a substrate connection opening for connection to the lower end surface of the substrate after the (A) coating liquid placement step in the upper surface (the surface opposite to the first layer (10)) of the second layer (20), and has a vacuum channel connection opening for connection to the first vacuum channel (11) of the first layer (10) in the lower surface (the surface on the first layer (10) side).

The three second vacuum channel-systems (21a, 21b, 21c) of the second layer (20) each have two vacuum channels, and the substrate connection opening and the vacuum channel connection opening of the vacuum channel belonging to the same system are arranged point-symmetrically (at positions 180 degrees apart from each other) on the upper and lower surfaces of the second layer (20), respectively.

The substrate connection openings of the three second vacuum channel-systems (21a, 21b, 21c) are all open near the outer periphery of the second layer (20) at equal distances from the axis of the second layer (20).

The vacuum channel connection openings of the three second vacuum channel-systems (21a, 21b, 21c) have different distances from the axis of the second layer (20) for each system. Specifically, the vacuum channel connection opening of the second vacuum channel A-system (21a) is open at a position corresponding to the substrate connection opening on the lower surface of the second layer (20). The second vacuum channel B-system (21b) extends radially inward from the substrate connection opening on the top surface of the second layer (20), and the vacuum channel connection opening thereof is open at a position slightly radially inward from the position corresponding to the substrate connection opening on the lower surface of the second layer (20). The second vacuum channel C-system (21c) extends further radially inward from the substrate connection opening on the upper surface of the second layer (20), and the vacuum channel connection opening thereof is open at a position further radially inward from the position corresponding to the substrate connection opening on the lower surface of the second layer (20).

When the first layer (10) and the second layer (20) are coaxially stacked, the distance from the axis of the second layer (20) of the vacuum channel connection opening of the second vacuum channel A-system (21a) included in the second layer (20) matches the radius of the arcuate opening of the first vacuum channel A-system (11a) of the first layer (10). The distance from the axis of the vacuum channel connection opening of the second vacuum channel B-system (21b) matches the radius of the arcuate opening of the first vacuum channel B-system (11b). The distance from the axis of the vacuum channel connection opening of the second vacuum channel C-system (21c) matches the radius of the arcuate opening of the first vacuum channel C-system (11c).

As a result of this configuration, when the first layer (10) and the second layer (20) are coaxially stacked and the second layer (20) is rotated relative to the first layer (10),
the vacuum channel connection opening of the second vacuum channel A-system (21a) moves along the arcuate opening of the first vacuum channel A-system (11a),
the vacuum channel connection opening of the second vacuum channel B-system (21b) moves along the arcuate opening of the first vacuum channel B-system (11b), and
the vacuum channel connection opening of the second vacuum channel C-system (21c) moves along the arcuate opening of the first vacuum channel C-system (11c).

When the second layer (20) rotates relative to the first layer (10), when the vacuum channel connection opening of the second vacuum channel (21) is in the opening area of the arcuate opening of the first vacuum channel (11), the vacuum channel connection opening moves along the arcuate opening and the two are connected, and when the vacuum channel connection opening of the second vacuum channel leaves the opening area of the arcuate opening of the first vacuum channel, the connection between the two is released.

Thus, by positioning the implementation position of the (A) coating liquid placement step and the implementation position of the subsequent step near both ends of the arcuate opening of the first vacuum channel (11) of the first layer (10) of the transport suction device (100) using the transport suction device (100) shown in FIGS. 1 and 2, the (B) suction coating step and the (C) transport step can be performed simultaneously on the substrate after the (A) coating liquid placement step.

Specifically, for example, the first layer (10) of the transport suction device (100) is fixed, and the second layer (20) is continuously rotated relative to the first layer (10). When the substrate after the (A) coating liquid placement step is received on the substrate connection opening of the second layer (20) in this state and rotated, since the substrate is transported from the position where the (A) coating liquid placement step is performed to the position where the subsequent step is performed, the (C) transport step is performed.

During this time, since the vacuum channel connection opening of the second vacuum channel (21) of the second layer (20) is in the opening area of the arcuate opening of the first vacuum channel (11) of the first layer (10), the reduced pressure generated by the vacuum pump is applied to the bottom surface of the substrate via the vacuum pump connection path, the pump connection opening, the first vacuum channel (11), the arcuate opening, the vacuum channel connection opening, the second vacuum channel (21), and the substrate connection opening, whereby the (B) suction coating step is performed.

When the substrate reaches the vicinity of the execution position of the subsequent step, the vacuum channel connection opening of the second vacuum channel (21) is outside of the arc-shaped area of the arcuate opening of the first vacuum channel (11), and the connection between the second vacuum channel (21) and the first vacuum channel (11) is released. As a result, the application of reduced pressure to the lower end surface of the substrate is also released, and the (C) suction coating step ends. At this point in time, the (B) transport step may also end.

Even after the substrate is transferred to the subsequent step, the rotation of the second layer (20) continues. At this time, the second vacuum channel (21), which has been disconnected from the first vacuum channel (11) and released from the reduced pressure state, is returned to the vicinity of the position where the (A) coating liquid placement step is performed in a state in which the substrate connection opening is empty, which prepares the device for the (B) transport step and the (C) suction coating step for a subsequent substrate.

The transport suction device (100) has a three-system vacuum channel, each of which is connected to a separate vacuum pump, whereby each can maintain an individual reduced pressure state, and thus, the (B) transport step and the (C) suction coating step of the subsequent substrate can be started without waiting for the completion of the (B) transport step and (C) suction coating step of one substrate, whereby efficient processes can be realized.

Since the time required for the (B) transport step and the (C) suction coating step can be adjusted by adjusting the rotation speed of the second layer (20), the transport suction device (100) is also applicable to processes with different predetermined suction times after coating liquid placement.

### DESCRIPTION OF REFERENCE SIGNS

- 10: first layer
- 11: first vacuum channel
- 11a: first vacuum channel A-system
- 11b: first vacuum channel B-system
- 11c: first vacuum channel C-system
- 12a: vacuum pump connection path A-system
- 12b: vacuum pump connection path B-system
- 12c: vacuum pump connection path C-system
- 20: second layer
- 21: second vacuum channel
- 21a: second vacuum channel A-system
- 21b: second vacuum channel B-system
- 21c: second vacuum channel C-system
- 100: transport suction device
- P1, P2, P3: vacuum pump

## Claims

1. A method for manufacturing an exhaust gas purification catalyst device, the method comprising the steps of:
(A) holding a honeycomb substrate having a plurality of cell flow channels partitioned by cell walls so that a flow direction of the cell flow channels is vertical, and placing a catalyst layer formation coating liquid on an upper end surface of the substrate,
(B) suctioning the substrate after the step (A) from a lower end surface with a vacuum pump to coat one or both of on the cell walls and in the cell walls of the substrate with the coating liquid, and
(C) transporting the substrate after the step (A) to a subsequent step, wherein
the step (B) and the step (C) are performed simultaneously by a transport suction device.

2. The method for manufacturing an exhaust gas purification catalyst device according to claim 1, wherein the transport suction device has one or more vacuum channels which connect the lower end surface of the substrate after the step (A) and the vacuum pump.

3. The method for manufacturing an exhaust gas purification catalyst device according to claim 2, wherein
each of the vacuum channels includes a first vacuum channel and a second vacuum channel,
the first vacuum channel is connected to a vacuum pump and is depressurized,
the second vacuum channel:
connects the lower end surface of the substrate and the first vacuum channel after the transport suction device receives the substrate after the step (A) until the substrate is transported to a predetermined position, and
releases the connection between the lower end surface of the substrate and the first vacuum channel when the substrate is transported to a predetermined position.

4. The method for manufacturing an exhaust gas purification catalyst device according to claim 3, wherein
the transport suction device has a first layer including the first vacuum channel and a second layer including the second vacuum channel, and is composed of two layers in which these are stacked,
the second layer is movable relative to the first layer, and
after receiving the substrate after the step (A), the second layer transports the substrate to a subsequent step by moving relative to the first layer.

5. The method for manufacturing an exhaust gas purification catalyst device according to any one of claims 1 to 4, wherein the transport suction device is disc-shaped.

6. The method for manufacturing an exhaust gas purification catalyst device according to claim 4, wherein
the transport suction device has a two-layer disc shape in which the first layer and the second layer, each having a disc shape, are stacked coaxially, and
the relative movement of the second layer relative to the first layer is rotation.

7. The method for manufacturing an exhaust gas purification catalyst device according to claim 6, wherein
the first vacuum channel has:
a pump connection opening, for connection to the vacuum pump, which is open in a surface of the first layer opposite to the second layer, and
an arcuate opening which is open in a surface of the second layer side surface along a circumference of the first layer,
the second vacuum channel has:
a vacuum channel connection opening for connection with the first vacuum channel, which is open in a surface of the second layer on the first layer side, and
a substrate connection opening for connection with the lower end surface of the substrate after the step (A), which is open in a surface opposite to the first layer,
when the second layer rotates relative to the first layer,
after the second layer has received the substrate after the step (A) and until the substrate is transported to a predetermined position, the vacuum channel connection opening of the second layer moves along the arc shape of the arcuate opening of the first layer, and
when the substrate is transported to a predetermined position, the vacuum channel connection opening of the second layer deviates from the arc shape of the arcuate opening of the first layer, whereby the connection between the lower end surface of the substrate and the first vacuum channel is released.

8. The method for manufacturing an exhaust gas purification catalyst device according to claim 7, wherein a central angle of the arc shape of the arcuate opening of the first vacuum channel is 90° or more and 270° or less.

9. An exhaust gas purification catalyst device manufacturing system, comprising:
a coating liquid placement device for holding a honeycomb substrate having a plurality of cell flow channels partitioned by cell walls so that a flow direction of the cell flow channels is vertical, and placing a catalyst layer formation coating liquid on an upper end surface of the substrate, and
a transport suction device for simultaneously performing suctioning of the substrate after the step (A) from a lower end surface to coat one or both of on the cell walls and in the cell walls of the substrate with the coating liquid, and transporting of the substrate after the step (A) to a subsequent step.

10. A transport suction device, for simultaneously performing suctioning of a substrate having a plurality of cell flow channels partitioned by cell walls and having a catalyst layer formation coating liquid placed on an upper end (surface) thereof, from a lower end surface thereof to coat one or both of on the cell walls and in the cell walls of the substrate with the coating liquid, and transporting of the substrate to a subsequent step.
